Europäisches Patentamt

European Patent Office

Office européen des brevets

(11) Numéro de publication: **0 222 707**
**B1**

(12) **FASCICULE DE BREVET EUROPEEN**

(45) Date de publication du fascicule du brevet: **12.12.90**

(51) Int. Cl.⁵: **A 47 J 31/30**

(21) Numéro de dépôt: **86830230.8**

(22) Date de dépôt: **21.08.86**

(54) **Cafetière avec dispositif distributeur de vapeur.**

(30) Priorité: **17.10.85 IT 2344885**

(43) Date de publication de la demande:
**20.05.87 Bulletin 87/21**

(45) Mention de la délivrance du brevet:
**12.12.90 Bulletin 90/50**

(84) Etats contractants désignés:
**CH DE FR GB LI**

(56) Documents cités:
**DE-C- 468 148**
**FR-A- 764 918**
**FR-A- 989 919**
**FR-A-2 541 572**

(73) Titulaire: **Lainati, Roberto**
**Via Rothpletz 2/4**
**I-28025 Gravellona Toce Novara (IT)**

(72) Inventeur: **Lainati, Roberto**
**Via Rothpletz 2/4**
**I-28025 Gravellona Toce Novara (IT)**

(74) Mandataire: **Aprà, Mario**
**APRA' BREVETTI Piazza Maria Adelaide 5**
**I-20129 Milano (IT)**

Courier Press, Leamington Spa, England.

**Description**

La présente invention concerne une cafetière équipée d'un dispositif de distribution de vapeur du type conforme au préambule de la revendication 1. Une telle cafetière est décrite dans le FR—A—2541572.

En particulier, l'invention est relative à une cafetière dans laquelle la boisson est obtenue par infusion dans l'eau bouillante (provenant d'un récipient à axe vertical, dûment chauffé) de café grillé et moulu, contenu dans un réservoir approprié; l'eau bouillante étant obligée de pénétrer dans celui-ci (pour produire l'infusion du café) sous la poussée de la vapeur engendrée par ébullition de ladite eau; ladite cafetière étant équipée d'un dispositif de distribution de vapeur dans lequel cette dernière est prélevée de celle qui se produit dans la partie supérieure du récipient à axe vertical et à travers une canalisation spéciale est amenée en communication avec l'extérieur, la boisson et la vapeur étant portée individuellement à l'extérieur au moyen de deux conduites dans lesquelles sont insérées deux soupapes d'arrêt à action manuelle.

La cafetière faisant l'objet de la présente invention comprend essentiellement un récipient (pouvant prendre la forme d'un tronc de cylindre, ou d'un tronc de cône ou autre) d'axe vertical, qui se termine en haut par un col cylindrique fileté recevant par accouplement hélicoïdal un couvercle porteur de deux soupapes unidirectionnelles pilotées; l'action dans chacune de ces soupapes d'un obturateur agissant sur un siège approprié peut être bloquée ou débloquée par manoeuvre d'un levier extérieur à commande manuelle.

Des deux dites soupapes l'une, montée dans une position coïncidant avec, ou très proche de l'axe longitudinal de la cafetière, est raccordée, à travers une ouverture appropriée, à la partie inférieure du couvercle surmontant le réservoir à café, ainsi qu'à un conduit tubulaire permettant le passage de la boisson, tandis que l'autre soupape est reliée, à travers une ouverture appropriée, de façon à être en regard de la concavité d'une gorge circulaire ménagée suivant un bord radialement saillant du réservoir à café; le fond de la dite gorge étant pourvu d'au moins un trou débouchant directement dans le récipient et qui permet à la vapeur produite dans la partie supérieure du récipient, d'envahir complètement la gorge, ainsi que le conduit destiné à la sortie de la vapeur; la partie de la périphérie extrême du bord radialement saillant du réservoir à café étant coincée entre l'extrémité supérieure du récipient et le couvercle.

Une cafetière équipée d'un dispositif distributeur de vapeur, qui fait l'objet de la présente invention, est décrite plus en détail dans la description suivante, pour l'intelligence de laquelle on se référera aux dessins annexés qui montrent, à titre d'exemple non limitatif, un mode préféré de mise en oeuvre de l'invention. Dans ces dessins:

—Les figures 1 et 2 sont deux vues de côé de la cafetière selon l'invention;

—La figure 3 montre cette même cafetière en vue par le haut;

—La figure 4 est une vue en coupe axiale, à plus grande échelle de ladite cafetière;

—La figure 5 est une vue partielle par le haut, à plus grande échelle, de la même cafetière;

—Les figures 6 et 7 sont des vues en coupe et par le haut respectivement, illustrant le réservoir destiné à contenir le café grillé, moulu.

En se référant aux figures ci-dessus, on voit qu'une cafetière selon l'invention comprend un récipient 1 à corps tronconique, d'axe longitudinal vertical A, qui se termine en haut par un col cylindrique fileté recevant par accouplement hélicoïdal un couvercle 2. Sur ce couvercle 2 sont montées deux soupapes unidirectionnelles 3 et 4 pilotées et l'action à l'intérieur de ces soupapes des obturateurs associés peut être bloquée ou débloquée par la manoeuvre de leviers 5 et 6 respectivement, à commande manuelle.

La soupape 3, montée dans une position très proche de l'axe longitudinal A de la cafetière, est reliée, à travers une ouverture 7, à la partie inférieure du couvercle 2 surmontant le réservoir à café 12, ainsi qu'à un conduit tubulaire 8 permettant le passage de la boisson, tandis que la soupape 4 est reliée, à travers une ouverture 9, à la partie inférieure du couvercle de façon à être directement en regard de la concavité d'une gorge circulaire 14, ménagée dans un bord 11, faisant radialement saillie du réservoir à café, le fond de la dite gorge étant pourvu d'au moins un trou 13 débouchant directement dans le réservoir et qui permet à la vapeur, produite dans la partie supérieure du récipient 1, de s'insérer et d'envahir totalement toute la gorge circulaire 14, ainsi que l'élément d'entrée de la soupape 4, avec laquelle est commandée la sortie de la vapeur du conduit tubulaire 10.

Il est évident que le trou (ou les trous) tel que 13, qui permet à la vapeur de se déplacer de la partie supérieure du récipient 1 au creux de la gorge et de ce creux vers l'ouverture 9 et à travers la soupape 4 dans le conduit tubulaire 10, peut être localisé dans un point quelconque du fond de la gorge circulaire 14.

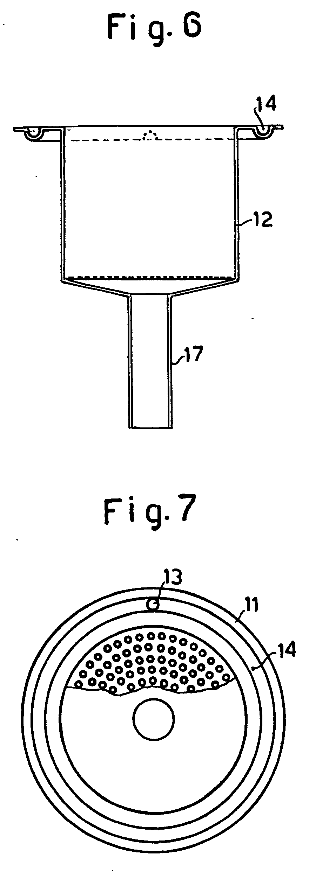

Les figures 6 et 7 montrent le réservoir à café 12 respectivement en coupe et en vue par le haut.

On voit dans ces figures que le bord 11 radialement saillant du réservoir 12 porte une gorge circulaire 14 dont la cavité, qui peut être d'un profil demi-circulaire, a pour but de guider la vapeur pénétrant dans ladite cavité par le trou 13, vers la soupape 4 et d'ici jusqu'au conduit tubulaire 10.

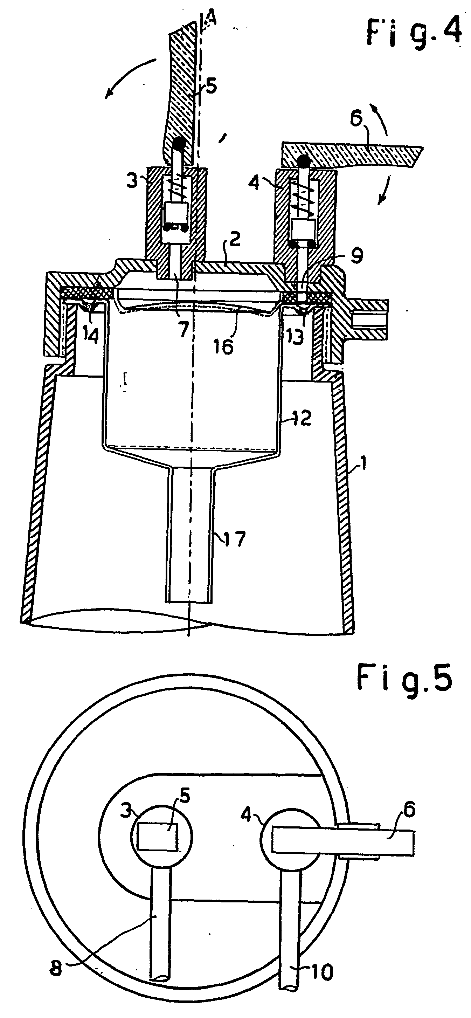

D'après un examen de la figure 4 on comprend facilement le le fonctionnement de la cafetière selon l'invention, qui peut se résumer comme suit.

Après avoir introduit dans le récipient 1 une quantité appropriée d'eau et rempli le réservoir 12 avec du café grillé et moulu jusqu'à atteindre le niveau du filtre 16, on amène à ébullition l'eau dont la vapeur tend alors à pousser l'eau à travers le conduit tubulaire 17 à l'intérieur du réservoir ou a lieu l'infusion du café et, de ce fait, la production de la boisson.

Lorsque les soupapes 3 et 4 sont dans la position illustrée à la figure 4, c'est-à-dire que le levier 5 est relevé et le levier 6 n'est pas baissé ni relevé, la boisson étant libre de passer par la soupape 3 ouverte peut s'écouler par le conduit 8 et être utilisée telle quelle.

Par contre, si on baisse le levier 5 (ce qui provoque la fermeture de la soupape 3) et on relève ou baisse le levier 6 (ce qui provoque l'ouverture de la soupape 4) on a pour effet d'obtenir l'arrêt du débit de boisson et la distribution de vapeur propre à travers la soupape 4 et le conduit 10. Pour éviter que l'on ne puisse par inadvertance maintenir le levier 5 baissé et le levier 6 en position de repos, la soupape 4 est établie pour s'ouvrir automatiquement sous l'effet d'une pression qui est supérieure à la pression pour laquelle on a l'ouverture de la soupape 3.

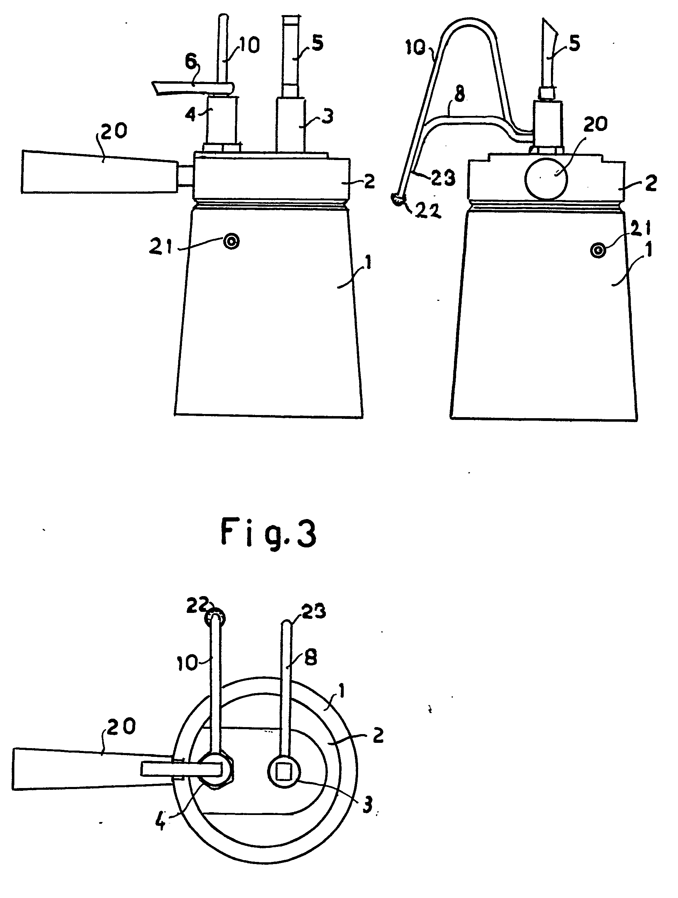

La cafetière est complétée par un manche (figures 1, 2, 3) et une soupape de sûreté 21.

Selon le mode d'exécution préféré de l'invention, la partie terminale du conduit de distribution de vapeur est pourvue d'un ajutage 22 muni d'une pluralité de trous, tandis que l'extrémité 23 du conduit de débit de boisson se termine par une ouverture unique.

**Revendications**

1. Cafetière du type dans lequel la boisson est obtenue par infusion dans de l'eau bouillante de café grillé et moulu contenu dans un réservoir prévu à cet effet, l'eau bouillante étant obligée de pénétrer à l'intérieur dudit réservoir sous la poussée de vapeur provenant de l'ébullition de ladite eau lorsque chauffée d'une manière adéquate, ladite cafetière, qui est équipée d'un dispositif distributeur de vapeur, comportant un récipient (1) d'axe vertical, qui se termine en haut par un col cylindrique fileté recevant par accouplement hélicoïdal un couvercle (2) étant caractérisée en ce que ledit couvercle (2) est porteur de deux soupapes (3, 4) unidirectionnelles pilotées, l'action dans chacune desdites soupapes d'un obturateur associé établi pour agir sur un siège approprié pouvant être bloquée ou débloquée par action sur un levier extérieur (5, 6) à commande manuelle, l'une (3) desdites soupapes, montée en position coïncidant avec, ou très proche de l'axe longitudinal de la cafetière, étant reliée à travers une ouverture appropriée (7) à la partie inférieure du couvercle (2) surmontant le réservoir à café (12), ainsi qu'à un conduit tubulaire (8) permettant l'écoulement de la boisson, tandis que l'autre soupape (4) est reliée, à travers une ouverture appropriée (9) à la partie inférieure du couvercle (2) de façon à se trouver directement en regard de la concavité d'une gorge circulaire (14) ménagée dans un bord (11) faisant radialement saillie du réservoir à café, le fond de la dite gorge étant pourvu d'au moins un trou (13) débouchant directement dans le récipient (1) et qui permet à la vapeur produite dans la partie supérieure du récipient (1) de s'insérer et d'envahir totalement toute la gorge circulaire (14), ainsi que l'élément d'entrée de la soupape (4), avec laquelle est commandée la sortie de la vapeur du conduit tubulaire (10); la partie du pourtour extrême dudit bord faisant radialement saille du réservoir étant coincée entre l'extrémité supérieure du récipient (1) et le couvercle (2).

2. Cafetière selon la revendication 1, caractérisée en ce que la soupape (3) contrôlant le passage de la boisson est établie pour fonctionner à une pression sensiblement plus importante que la pression nécessaire pour le fonctionnement de la soupape (4) contrôlant le passage de la vapeur.

3. Cafetière selon la revendication 1, caractérisée en ce que la partie terminale du conduit (10) de distribution de vapeur est pourvue d'un ajutage (22) muni d'une pluralité de trous.

**Patentansprüche**

1. Kaffeemaschine, bei der das Getränk durch Infusion in siedendes Wasser von geröstetem, gemahlenem und in einem geeigneten Behälter bereitgestellten Kaffee erhältlich ist, das siedende Wasser in das Innere des genannten Behälters durch den aus dem auf Siedetemperatur erhitzten Wasser erzeugten Dampf gedrückt wird und die Kaffeemaschine einen Dampfverteiler mit einem Speicher (1) mit senkrecht stehender Achse umfasst und letzterer oben mit einem zylinderförmigen Gewindehals endet, auf dem ein Deckel (2) verschraubt ist, dadurch gekennzeichnet, dass der Deckel (2) zwei gesteuerte Sperrventile (3, 4) umfasst, in denen jeweils die Wirkung eines zugeordneten mit einem entsprechenden Ventilsitz zusammenarbeitenden Ventilkörpers durch Betätigung eines äusseren Handhebels (5, 6) gesperrt bzw. entsperrt werden kann, wobei von diesen das eine Ventil (3) mit der Längsachse der Kaffeemaschine ganz oder beinahe zusammenfallend über eine Öffnung (7) mit dem Unterteil des auf dem Kaffeebehälter (12) angeordneten Deckels (2) und einer Rohrleitung (8) für den Durchfluss des Getränkes verbunden ist, während das andere Ventil (4) über eine entsprechende Öffnung (9) mit dem Unterteil des Deckels (2) derart verbunden ist, dass es sich unmittelbar gegenüber der Kehle einer kreisförmigen in einem radial vorstehenden Rand (11) des Behälters (12) angeordneten Nut (14) befindet, wobei ausserdem im Boden dieser Nut wenigstens eine Bohrung (13) vorhanden ist, die direkt in den Speicher (1) mündet und dem im oberen Teil des Speichers (1) erzeugten Dampf gestattet, in die kreisförmige Nut (14) sowie in das Einlassglied des den Auslass des Dampfes aus der Rohrleitung (10) steuernden Ventils (4) einzudringen, und wobei der äusserste Umfangsteil des erwähnten vom Behälter radial vorstehenden Randes zwischen dem oberen Ende des Behälters (1) und dem Deckel (2) eingespannt ist.

2. Kaffeemaschine nach Anspruch 1, dadurch gekennzeichnet, dass das den Durchfluss des Getränkes steuernde Ventil (3) für den Betrieb mit einem erheblich höheren Druck gegenüber dem zum Betrieb des den Durchfluss des Dampfes steuernden Ventils (4) erforderlichen Druck ausgelegt ist.

3. Kaffeemaschine nach Anspruch 1, dadurch gekennzeichnet, dass das Endstück der Dampfrohrleitung (10) mit einer eine Vielzahl von kleinen Löchern aufweisenden Düse (22) versehen ist.

**Claims**

1. Coffee-maker of the type in which the drink is obtained by infusion in boiling water of roasted ground coffee contained in a reservoir provided for this purpose, the boiling water being forced to penetrate into the said reservoir under the pressure of steam made by boiling the said water when heated in an appropriate manner, the said coffee-maker, which is equipped with a steam-distributing device, comprising a receptacle (1) of vertical axis, which ends at the top in a threaded cylindrical neck receiving by helical coupling a cover (2), being characterized in that the said cover (2) bears two pilot-operated unidirectional valves (3, 4), it being possible for the action in each of the said valves of an associated obturator adapted to act on a suitable seat to be blocked or unblocked by acting on a manually controlled external lever (5, 6), one (3) of the said valves, mounted in a position coincident with, or very close to, the longitudinal axis of the coffee-maker, being linked via a suitable opening (7) to the lower part of the cover (2) surmounting the coffee reservoir (12), and also to a tubular conduit (8) permitting the drink to flow out, whereas the other valve (4) is linked, via a suitable opening (9), to the lower part of the cover (2) so as to be situated directly facing the concavity of a circular groove (14) formed in an edge (11) projecting radially from the coffee reservoir, the bottom of the said groove being provided with at least one hole (13) which opens directly into the receptacle (1) and which permits the steam produced in the upper part of the receptacle (1) to enter and totally pervade the entire circular groove (14), and also the inlet element of the valve (4), with which the release of the steam from the tubular conduit (10) is controlled, the part of the extreme circumference of the said edge projecting radially from the reservoir being clamped between the upper end of the receptacle (1) and the cover (2).

2. Coffee-maker according to Claim 1, characterized in that the valve (3) controlling the passage of the drink is adapted to function at a pressure substantially higher than the pressure required for the functioning of the valve (4) controlling the passage of the steam.

3. Coffee-maker according to Claim 1, characterized in that the end part of the steam-distribution conduit (10) is provided with a nozzle (22) having a plurality of holes.

Fig.3

EP 0 222 707 B1

Fig.4

Fig.5

# Fig. 6

# Fig. 7